# EUROPÄISCHE PATENTSCHRIFT

(11) **EP 1 258 458 B1**
(45) Veröffentlichungstag und Bekanntmachung des Hinweises auf die Patenterteilung: **21.11.2012**
(21) Anmeldenummer: 02003303.1
(22) Anmeldetag: 13.02.2002
(51) Int. Cl.: C01F 7/02, B41M 5/00, C09D 7/12, C09D 17/00, D21H 19/38

(54) **Aluminiumoxiddispersionen, ihre Verwendung und Verfahren zur deren Herstellung**
Use, process and preparation for Aluminium oxide dispersions
Dispersions d'oxyde d'alumine, leur utilisation et leur procédé de production

(30) Priorität: 18.05.2001 DE 10124629
(43) Veröffentlichungstag der Anmeldung: 20.11.2002
(73) Patentinhaber: Evonik Degussa GmbH, 45128 Essen (DE)
(72) Erfinder: Schneider, Gerrit, Dr., 63456 Hanau (DE); Scharfe, Thomas, 63755 Alzenau (DE); Lach, Heinz, 63571 Gelnhausen (DE)

(56) Entgegenhaltungen:
- EP-A1- 0 395 925
- EP-A1- 1 083 151
- EP-A2- 1 277 702
- DE-C1- 4 035 089

## Beschreibung

Die Erfindung betrifft eine Dispersion von Aluminiumoxid, ein Verfahren zu ihrer Herstellung sowie seine Verwendung.

Gegenstand der Erfindung ist eine Dispersion von Aluminiumoxid in wässriger Lösung, welche ein pyrogen hergestelltes Aluminiumoxid mit einer BET-Oberfläche von 100 ± 15 m²/g enthält, und welche dadurch gekennzeichnet ist, dass sie einen pH-Wert von 4,5 ± 1,5 aufweist, wobei zur Einstellung des pH-Wertes zu der Dispersion Essigsäure hinzugegeben wurde und bei der Herstellung der Dispersion zur Dispergierung des hochoberflächigen pyrogen hergestellten Aluminiumoxids hergestellten Aluminiumoxids solange eine Scherung mit einem Rotor-Stator-Aggregat durchgeführt wurde bis eine Zielpartikelgröße von d₅₀ = 120 nm erreicht wurde.

In einer Ausführungsform der Erfindung kann das Aluminiumoxid die folgenden physikalisch-chemischen Kenndaten aufweisen:

| Aluminiumoxid | |
|---|---|
| BET-Oberfläche m²/g | 100 ± 15 |
| mittlere Größe der Primärteilchen nm | 20 |
| Stampfdichte ¹ g/l | ca.60 |
| Trocknungsverlust ² bei Verlassen des Lieferwerkes (2 Stunden bei 105 °C) % | < 5 |
| Glühverlust ^{2 5} (2 Stunden bei 1000 °C) % | < 3 |
| pH-Wert ³ (in 4-%iger wäßriger Dispersion) | 4-5 |
| Röntgenstruktur | überwiegend Gamma |
| isoelektrischer Punkt bei pH-Wert | 9,0 |
| Dichte g/cm³ | 2,9 |
| Al₂O₃ ⁶ % | > 99,6 |
| TiO₂⁶ % | < 0,1 |
| SiO₂ ⁶ % | < 0,1 |
| Fe₂O₃ ⁶ % | < 0,2 |
| HCl ^{6 7}% | < 0,5 |
| Siebrückstand ⁴ (nach Mocker, 45 µm) | < 0,05 |

| | |
|---|---|
| ¹ nach DIN 53 194 oder ISO 787/XI ² nach DIN 55 921 oder ISO 787/II bzw. ASTM D 280-33 ³ nach DIN 53 200 oder ISO 787/IX bzw. ASTM D 1208-65 ⁴ nach DIN 53 580 oder ISO 787/XVIII ⁵ bezogen auf die 2 Stunden bei 105 °C getrocknete Substanz ⁶ bezogen auf die 2 Stunden bei 1000 °C geglühte Substanz ⁷ HCl-Gehalt ist Bestandteil des Glühverlustes | |

Das Verfahren zur pyrogenen Herstellung des Aluminiumoxides ist bekannt aus Ullmann's Enzyklopädie der technischen Chemie 4. Auflage, Band 21, Seite 464.

Das Aluminiumoxid C ist bekannt aus der Schriftenreihe Pigmente Nr. 56 der Degussa AG.

In der Dispersion können die Aluminiumoxid-Teilchen eine mittlere Partikelgröße von d₅₀<200 nm, gemessen mittels dynamischer Lichtstreuung aufweisen.

Das Dokument "ALON" Brochure, Cabot Corporation (1968) offenbart auf Seite 4 (linke Spalte) eine Dispersion aus Aluminiumoxid, dass pyrogen hergestellt wurde, eine spezifische BET-Oberfläche von 100 ± 15 m2/g, und einen pH-Wert von 4.5 ± 1.5 aufweist. Der pH-Wert wurde auf verschiedene Werte eingestellt. Es wurde keine Verbindung genannt, die zur Einstellung des pH-Wertes verwendet wurde.

Die erfindungsgemäße Dispersion verfügt über eine hohe Stabilität hinsichtlich Sedimentation und Viskosität sowie einen hohen Feststoffgehalt. Sie ist hervorragend zur Weiterverarbeitung in Inkjet-Streichfarben geeignet.

Der Gehalt an Aluminiumoxid kann 30 ± 20 Gew.-% betragen.

Die Dispersion kann die folgenden zusätzlichen Bestandteile (Dispersionsadditive), wie Säuren, Basen, Tenside, Polymere, Polyelektrolyte und ein Bindersystem enthalten. Es können weiterhin organische oder anorganische Säuren oder Basen, Salze, Additive, wie ionische oder nichtionische Tenside, Puffersysteme oder Biozide sowie sonstige Hilfsstoffe zur Stabilisierung der Dispersion oder Steigerung von Qualität oder Lagerfähigkeit (Dispergierhilfsmittel oder Stabilisatoren) in der Dispersion vorhanden sein.

Anorganische Säuren können Phophorsäure, Salpetersäure, Schwefelsäure o.a. sein.

Organische Säuren können Ameisensäure, Essigsäure, Propionsäure, Oxalsäure, Malonsäure o.a. sein.

Basen können Kaliumhydroxid sowie organische Amine sein.

Salze können Natriumchlorid, Kaliumformiat sowie Calciumnitrat sein.

Puffersysteme können Kaliumhydrogenphosphat/Phosphorsäure-Puffer oder Essigsäure/Natriumacetat-Puffer sein.

Ein weiterer Gegenstand der Erfindung ist ein Verfahren zur Herstellung der erfindungsgemäßen Dispersion von Aluminiumoxid, welches dadurch gekennzeichnet ist, daß man ein Aluminiumoxid, welches eine spezifische Oberfläche nach BET von 100 ± 15 m²/g aufweist, in das vorgelegte Wasser, gegebenenfalls unter Rühren, einbringt, den pH-Wert mit Essigsäure auf einen Wert -von 4.5 ± 1.5 einstellt und die Mischung unter Einbringung von Scherkräften mittels eines Rotor-Stator-Aggregates dispergiert. Hierdurch erhält man ein Endprodukt, welches sich durch seine definierte Teilchengrößenverteilung, definierten pH-Wert, definierte Viskosität, hohe Stabilität gegenüber Sedimentation oder Agglomeration, hohe Lagerstabilität (-konstanz) und seinen hohen Füllgrad auszeichnet.

Der pH-Wert beträgt 4,5 ± 1,5, insbesondere 4,5 ± 0,3 betragen.

Zur Einstellung des pH-Wertes gibt man zu der Dispersion Essigsäure hinzu.

Die Dispersion kann eine mittlere Partikelgrößenverteilung von d₅₀<150 nm, gemessen mittels dynamischer Lichtstreuung aufweisen.

Der Feststoffgehalt der Dispersion kann 30 ± 20 Gew.-%, vorzugsweise 30 ± 10 Gew.-%, insbesondere 30 ± 0,5 Gew.-% betragen.

Die Viskosität der erfindungsgemäßen Dispersion kann 100 bis 1500 m Pas (50 RPM) betragen.

Gegenüber den in EP 0 732 219 genannten kationischen, sehr feinen Partikel-Dispersionen zeichnen sich sowohl die erfindungsgemäße Dispersion als auch die daraus hergestellten Streichfarben durch einen höheren Feststoffgehalt aus. Dies wirkt sich positiv auf die Herstellkosten von Ink-Jet-Medien aus, da bei der Herstellung dieser Medien weniger Wasser bei der Trocknung der Inkjet-Streichfarbe verdampft werden muß: Somit kann bei gegebener Trocknerleistung die Verweildauer im Trockner kürzer gehalten und dadurch die Beschichtungsgeschwindigkeit erhöht werden.

Die erfindungsgemäße Dispersion weist die folgenden Vorteile auf:
◆ hohe kationische Ladung auf der Oberfläche der Teilchen, verglichen mit Dispersionen, die mit naßchemisch erzeugten Aluminiumoxiden (-oxidhydroxiden) hergestellt werden
◆ definiert einstellbare Partikelgrößenverteilung der Dispersion, im Gegensatz zu Dispersionen aus anderen pyrogenen Aluminiumoxiden oder naßchemisch erzeugten Aluminiumoxiden (-oxidhydroxiden), die mittels andersartiger Dispergierprozesse hergestellt wurden
◆ hohe Reinheit der Dispersion, verglichen mit Dispersionen, die mit naßchemisch erzeugten Aluminiumoxiden (-oxidhydroxiden) hergestellt wurden
◆ exakt kontrollierbares Elektrolytniveau innerhalb der Dispersion, verglichen mit Dispersionen aus anderen pyrogenen Aluminiumoxiden oder naßchemisch erzeugten Aluminiumoxiden (-oxidhydroxiden), bei denen infolge des Ausgangspulvers oder des Dispergierprozesses die Elektrolytkonzentration nicht exakt eingestellt werden kann
sehr hohe Oberfläche des pyrogenen Aluminiumoxides, verglichen mit Dispersionen aus anderen pyrogenen Aluminiumoxiden oder naßchemisch erzeugten Aluminiumoxiden (-oxidhydroxiden)
◆ stark ausgeprägte "Struktur/Vernetzung" der Aluminiumoxidprimärpartikel innerhalb der Dispersion, verglichen mit Dispersionen aus anderen pyrogenen Aluminiumoxiden oder naßchemisch erzeugten Aluminiumoxiden (-oxidhydroxiden)
◆ hohe Härte und Abrasionsbeständigkeit der in der Dispersion verteilten Partikel, verglichen mit Dispersionen aus naßchemisch erzeugten Aluminiumoxiden (-oxidhydroxiden), bei denen die Primärpartikel weniger hart sind

Desweiteren betrifft die Erfindung ein Verfahren zur Herstellung von Inkjet-Streichfarben, die mit der erfindungsgemäßen Dispersionen hergestellt werden können und der daraus hergestellten glänzenden Medien. Diese Medien zeichnen sich durch einen hohen Glanzwert, sehr hohe Farbdichten beim Druck, großen Farbraum und geringe Trocknungszeiten aus.

Die erfindungsgemäße Dispersion kann zur Herstellung von Ink-jet-Medien, wie Papier eingesetzt werden.

Insbesondere kann die erfindungsgemäße Dispersion zur Herstellung von Streichfarben verwendet werden.

Ein weiterer Gegensatz der Erfindung sind Beschichtungen, welche dadurch gekennzeichnet sind, daß sie aus einem Substrat mit einer glänzenden Beschichtung bestehen, in der die Beschichtungen Aluminiumoxid, Dispersionsadditive und ein Bindersystem enthalten, wobei die die Beschichtung aufbauenden Aluminiumoxidpartikel aus der Dispersion gemäß Erfindung stammen.

Die erfindungsgemäßen Beschichtungen können ein Aluminiumoxid-Binderverhältnis von 10:1 bis 1:2 aufweisen. Bevorzugt können die Beschichtungen aus Streichfarben angefertigt werden, die einen Feststoffgehalt von mindestens 15 Gew.-%, vorzugsweise von 22 Gew.-% und mehr aufweisen.

Die erfindungsgemäßen Beschichtungen können auf ein Substrat, vorzugsweise Papier, mit einem Flächengewicht von 80 bis 250 g/m² aufgetragen sein. Das Substrat kann einen Cobb₁₀-Wert von 0 bis 60 aufweisen.

Das Substrat kann eine Polymerfolie sein. Weiterhin kann auf dem Substrat eine wasserundurchlässige Sperrschicht aufgebracht worden sein.

Die erfindungsgemäße Dispersion kann zur Herstellung von Ink-jet-Medien, Digital-Imaging-Produkten und anderen Druckmedien eingesetzt werden.

Die erfindungsgemäße Dispersion kann zur Herstellung von Beschichtungen auf Werkstoffen wie Papier, Metallen, Gläsern, Keramiken, Kunststoffen, Polymeren, Kautschuken und/oder Textilien verwendet werden.

Die erfindungsgemäße Dispersion von Aluminiumoxid kann zum Polieren oder Säubern von Metallen, Halbleiterelementen in der Elektronikindustrie, Gläsern, Keramiken und anderen harten Werkstoffen verwendet werden.

Die erfindungsgemäße Dispersion kann zur Beschichtung von Leuchtstoffröhren, Glühlampen oder anderen Lichtquellen verwendet werden.

### Beispiele

Als Aluminiumoxid C wird ein auf pyrogenem Wege hergestelltes Aluminiumoxid mit den folgenden physikalisch-chemischen Kenndaten verwendet:

| Aluminiumoxid | |
|---|---|
| BET-Oberfläche m²/g | 100 ± 15 |
| mittlere Größe der Primärteilchen nm | 20 |
| Stampfdichte ¹ g/l | ca.60 |
| Trocknungsverlust ² bei Verlassen des Lieferwerkes (2 Stunden bei .105 °C)% | < 5 |
| Glühverlust ^{2 5} (2 Stunden bei 1000 °C) % | < 3 |
| pH-Wert ³ (in 4-%iger wäßriger Dispersion) | 4-5 |
| Röntgenstruktur | überwiegend Gamma |
| isoelektrischer Punkt bei pH-Wert | 9,0 |
| Dichte g/cm³ | 2,9 |
| Al₂O₃ ⁶ % | > 99,6 |
| TiO₂ ⁶ % | < 0,1 |
| SiO₂ ⁶ % | < 0,1 |
| Fe₂O₃ ⁶ % | < 0,2 |
| HCI ^{6 7}% | < 0,5 |
| Siebrückstand ⁴ (nach Mocker, 45 µm) | < 0,05 |

| | |
|---|---|
| ¹ nach DIN 53 194 oder ISO 787/XI ² nach DIN 55 921 oder ISO 787/II,bzw. ASTM D 280-33 (Trocknungsverlust) und ASTM D 1208-65 (Glühverlust) ³ nach DIN 53 200 oder ISO 787/IX, bzw. ASTM D 1208-65 ⁴ nach DIN 53580 oder ISO 787/XVIII ⁵ bezogen auf die 2 Stunden bei 105 °C getrocknete Substanz ⁶ bezogen auf die 2 Stunden bei 1000 °C geglühte Substanz ⁷ HCI-Gehalt ist Bestandteil des Glühverlustes | |

### Herstellung der erfindungsgemäßen Dispersion

Die Ansatzgröße beträgt 1500 kg der Enddispersion W 630. Begonnen wird mit einer Vorlage von 1000 Liter VE-Wasser. Zur Einarbeitung vorgesehen sind 450 kg Aluminiumoxid C, entsprechend 30 Gew.-%.

Der pH-Wert wird nach jedem Sack des zugegebenen Aluminiumoxids C kontrolliert und zunächst innerhalb eines Korridors von pH=4,6 ...4,8, vorzugsweise 3,9 bis 4,1 gehalten (mittels halbkonz. Essigsäure).

Nach 30 Sack Aluminiumoxid C wird die Partikelgröße für die Dispersion bestimmt. Sie beträgt d₅₀=150 nm (mit deutlich sichtbarem Grobanteil). Nach einer Einarbeitungszeit von zwei Stunden und Zugabe des 45. Sack Aluminiumoxid C (je 10 kg!) sind kontinuierlich insgesamt 14 Liter halbkonzentrierte Essigsäure zugegeben worden (pH=4,4).

Nach erfolgter Pulverzugabe beträgt der Wert für die Partikelgrößenverteilung d₅₀=120 nm.

Die direkt nach der Pulverzugabe gezogene Probe geliert innerhalb eines Zeitraums von zwei Wochen.

Anschließend werden neben weiteren 14 Litern halbkonzentrierter Säure bei ("intensives Mischen") der Dispersion 3,5 kg Preventol zugefügt (= 0,23 Gew.-%). Eine nochmalige pH-Korrektur erfolgt nach weiteren 60 min.

Nach dieser pH-Anpassung auf den Wert pH=4,1 (vor Scherung) beträgt der d₅₀-Wert = 138 nm.

Nach 5 min Scherzeit wird eine erneute Probe gezogen (d₅₀=123 nm). Dieser Wert liegt bereits sehr nahe am vorgegebenen Zielwert. Die Dispersion wird deshalb nur 3 weitere Minuten geschert.

Die Partikelgröße beträgt danach d₅₀=120 nm. Mit erreichtem Zielwert wird die Scherung beendet. Nach Abschluß des

Scherprozesses steigt der pH-Wert (vermutlich durch den Strukturabbau / die erhöhte Oberfläche) von pH=4,1 auf pH= 4,3 an.

### Anwendungstechnische Beispiele

Die folgenden Beispiele zeigen, daß die erfindungsgemäße Dispersion bekannten Dispersionen in einer Streichfarbe sowie im dazugehörigen Inkjet-Medium deutlich überlegen ist und bessere Ergebnisse erzielt.

Die verwendeten Rezepturen der Inkjet-Streichfarben sind Richtrezepturen. So können auch andere Bindemittel als Polyvinylalkohol (mit verschiedenen Verseifungsgraden) in Kombination oder alleine, wie zum Beispiel Polyvinylpyrrolidone, Polyvinylacetate, silanisierte Polyvinylalkohole, Styrol-Acrylat-Latices, Styrol-Butadien-Latices, Melamin-Harze, Ethylen-Vinylacetat-Copolymere, Vinylpyrrolidon-Dimethylaminopropylenmethacrylamid-Copolymere, Polyurethan-Harze, synthetische Harze, wie Polymethylmethacrylate, Polyesterharze (zum Beispiel ungesättigte Polyester-Harze), Polyacrylate, modifizierte Stärke, Kasein, Gelantine, Cellulose-Derivate (zum Beispiel Carboxymethylcellulose),und auch in anderen Massenverhältnissen zum pyrogenen Aluminiumoxid als im anwendungstechnischen Beispiel genannt, eingesetzt werden.

Die erfindungsgemäße Beschichtung kann neben der erfindungsgemäßen Dispersion auch noch ein oder mehrere andere Pigmente bzw. Dispersionen enthalten. Dies können sein: Calciumcarbonate, Schichtsilikate, Aluminiumsilikate, Kunststoffpigmente (zum Beispiel Polystyrol, Polyethylen, Polypropylen), Kieselsäuren (zum Beispiel kolloidale Kieselsäuren, Fällungskieselsäuren, Kieselgele, pyrogene Kieselsäuren, pyrogene Mischoxide), kationisierte Varianten der genannten Kieselsäure-Verbindungen, AluminiumVerbindungen (zum Beispiel Aluminiumsole, kolloidale Aluminiumoxide und deren Hydroxy-Verbindungen, wie Pseudoboehmite, Boehmite, Aluminiumhydroxid), Magnesiumoxid, Zinkoxid, Zirkonoxid, Magnesiumcarbonate, Kaolin, Clay, Talkum, Calciumsulfat, Zinkcarbonat, Satinweiß, Lithopone, Zeolithe oder Dispersionen dieser Verbindungen.

Sowohl der Feststoffgehalt der Dispersion als auch der der Streichfarbe können im Vergleich zum anwendungstechnischen Beispiel variiert werden. Weitere Väriationsmöglichkeiten bestehen in der Veränderung des pH-Wertes, der Art der Dispergierung, der Zusammensetzung der Streichfarbenformulierung und des Mediums der Dispersion.

Zur Erhöhung der Wasserfestigkeit des Bindersystems und somit der Beschichtung können Vernetzer wie zum Beispiel Zirkonoxide, Borsäure, Melaminharze, Glyoxal und Isocyanate und andere Moleküle, die die Molekülketten des Bindersystems miteinander verbinden, eingesetzt werden.

Des weiteren können in der Streichfarbe Hilfsmittel, wie optische Aufheller, Entschäumer, Netzmittel, pH-Puffer, UV-Absorber und Viskositätshilfsmittel eingesetzt, werden.

Als Beispiele für kationische Substanzen zur Kationisierung des Binders sind zu erwähnen: Polyethylenimin, Polyallylamine, Polyvinylamine, Polymere, bestehend aus kationischen Monomeren, wie primären, sekundären und tertiären Aminen, die an den Seitenketten liegen und quarternäre Ammonium-Verbindungen.

Der Beschichtungsaufbau des Mediums kann sich auch von dem anwendungstechnischen Beispiel unterscheiden, indem die Beschichtung aus mehreren Beschichtungslagen des gleichen Typs oder anderen Lagen besteht und sich die Beschichtung, die mit der erfindungsgemäßen Dispersion hergestellt worden ist, nur in einer der vorhandenen Lagen befindet.So können zum Beispiel noch weitere tintenabsorptive Beschichtungen (als Beispiel Fällungskieselsäure-Beschichtungen)unter der erfindungsgemäßen Inkjet-Beschichtung aufgebracht werden. Es können desweiteren eine oder mehrere Polymerlagen (z.B Polyethylen) auf dem Substrat und/oder auf der erfindungsgemäßen Beschichtung aufgebracht werden, um die mechanische Stabilität und/oder den Glanz in der Beschichtung zu erhöhen (z.B. Fotobasispapier, Laminierung). Selbst wenn das Inkjet-Medium eine oder mehrere Lagen der oben beschriebenen Lagen enthält und mit der erfindungsmäßigen Beschichtung versehen ist, verbessert sich die Bedruckbarkeit für die Mehrzahl von Druckanwendungen.

Die Streichfarbenrezeptur kann mit allen üblichen Auftragsverfahren (alleine oder in Kombination der Verfahren) auf ein Substrat aufgebracht werden. Übliche Verfahren (die aber nicht auf die genannten Verfahren beschränkt sind) sind: Walzenauftrag,Bladeauftrag, Luftbürste, Rakel (profiliert, glatt, Spalt), Cast coating-Verfahren, Filmpresse, Leimpresse,Vorhanggieß-Verfahren (curtain-coating) und Schlitzdüsen-Auftrag (z.B.Gießrakel). Die Verfahren, die dabei eine extrem homogene Beschichtung ermöglichen, wie zum Beispiel Cast-coating, VorhanggießVerfahren und Schlitzdüsen-Auftrag, werden dabei bevorzugt eingesetzt.

Das beschichtete Substrat kann mit allen üblichen Verfahren (alleine oder in Kombination der Verfahren) getrocknet werden. Übliche Verfahren (die aber nicht auf die genannten Verfahren beschränkt sind) sind: Luft- oder Konvektionstrocknung (z.B. Heißluftkanal), Kontakt- oder Konduktionstrocknung, Energiestrahlentrocknung (z.B. Infrarot und Microwellen).

Anwendungstechnisches Beispiel 1:

Die Glanzwerte werden mit einem Byk-Gardner Glanzmeßgerät und der Prüfkarte 2855 (schwarzer Bereich) als Unterlage gemessen.

Die Bewertung der Druckeigenschaften der Beschichtungen erfolgt in der Art, daß ein Testbild jeweils mit einem HP 550 C-Drucker und einem Epson Stylus Color 800-Drucker auf die Beschichtungen gedruckt wird und diese bedruckten Beschichtungen von drei unabhängigen Personen anhand der bei- gefügten Notenskala bewertet werden.

Die Farbdichten werden anhand des Testbildes, welches auch vollflächige Farbtöne (schwarz, magenta, cyan, gelb)beinhaltet, mit einem GretagMacbeth (Trademark) SpectroEye gemessen. Die Messung erfolgt bei einem Betrachtungswinkel von 2° und Einsatz einer D50 Lichtquelle.

Edukte:
Polyvinylalkohol Mowiol 40-88 (Fa. Clariant, D)
Aluminiumoxid C - Dispersion (Essigsäure/Rotor-Stator-System)
Aluminiumoxid C - Dispersion (Essigsäure/Dissolver) beansprucht nicht
Aluminiumoxid C - Dispersion (Zitronensäure/Rotor-Stator-System) beansprucht nicht
Aluminiumoxid C - Dispersion (Zitronensäure/Dissolver) beansprucht nicht
Alle Dispersionen werden aus dem gleichen Aluminiumoxid-Pulver hergestellt (gleiche Charge).

Rezeptur und Verfahrensweise zur Herstellung von Inkjet-Streichfarben:

Die wässrige Polyvinylalkohol-Lösung (Mowiol 40-88) mit 12,14 % Feststoffgehalt wird in ein 400 ml Becherglas vorgelegt und mit der Menge Wasser versetzt, so daß man zusammen mit den Aluminiumoxid C-Dispersionen einen Feststoffgehalt von w = 0,23 in der Streichfarbe erhält. Bei den vorliegenden Dispersionen läßt sich kein viel höherer Feststoffgehalt in der Streichfarbe erzielen, da dieser durch den Feststoffgehalt der Dispersion und insbesondere der Polyvinylalkohol-Lösung limitiert ist, obwohl die Viskosität gering ist.

Zu der Polyvinylalkohol-Lösung wird mittels einer Pipette die jeweilige Dispersion unter Rühren mit 500 UPM langsam innerhalb von 5 Minuten hinzugetropft. Nach Beendigung der Zugabe läßt man noch 30 Minuten bei 500 UPM nachrühren, um eine homogene Streichfarbe zu erhalten. Danach werden die Streichfarben mittels Exsikkator und Wasserstrahlpumpe entlüftet. Zur Kontrolle wird nach dem Ansetzen der Streichfarben der Ist - Feststoff, pH-Wert und Viskosität bestimmt.

Die Teile, die in der folgenden Tabelle angegeben sind, verstehen sich als Gewichtsteile, bezogen auf den Feststoff.

| | | | | | | | |
|---|---|---|---|---|---|---|---|
| Alu C, Zitronensäure, Dissolver * | **100 Teile** | | | | | | |
| Alu C, nicht Zitronensäure, Rotor-Stator-System * | | | **100 Teile** | | | | |
| Alu C, nicht Essigsäure, Dissolver * | | | | | **100 Teile** | | |
| Alu C, Essigsäure, Rotor-Stator-System | | | | | | | **100 Teile** |
| PVA 40-88 | **27 Teile** | | **27 Teile** | | **27 Teile** | | **27 Teile** |
| Ist-Feststoff-gehalt der Streichfarbe in % | 23,03 | | 22,96 | | 22,98 | | 23,01 |
| pH-Wert | 4, 5 | | 4,5 | | 4,5 | | 4,5 |

| Viskosität, Brookfield in mPa s nach 24 h | | | | | | | |
|---|---|---|---|---|---|---|---|
| Nach Aufrühren | 5 UPM | 854 | | 490 | | 638 | 412 |
| | 10 UPM | 826 | | 452 | | 584 | 398 |
| | 20 UPM | 758 | | 438 | | 576 | 390 |
| | 50 UPM | 702 | | 426 | | 555 | 384 |
| | 100 UPM | 626 | | 412 | | 538 | 376 |
| | | | | | | | |
| Bemerkungen zur Streichfarbenherstellung | gut | | gut | | gut | | gut |

| | | | | | | | |
|---|---|---|---|---|---|---|---|
| * nicht beansprucht | | | | | | | |

Aus den erhaltenen Viskositätsdaten läßt sich erkennen, daß man mit der Kombination Essigsäure/Rotor-Stator-System die niedrigsten Viskositäten erhält. Dies ist erwünscht, weil man den Feststoffgehalt der Streichfarbe weiter erhöhen kann, ohne zu hohe Viskositäten zu erhalten, auf Grund derer die Streichfarben sich nicht mehr applizieren lassen. Eine derartige Erhöhung ist zum Beispiel durch die Erhöhung des Feststoffgehaltes der Binderlösung möglich. Verfahrensweise zur Herstellung einer Inkjet-Beschichtung aus der zuvor genannten Inkjet-Streichfarbe Das Beschichten einer 100 Micrometer dicken, unbehandelten Polyesterfolie erfolgt mit einem Erichsen-Rakelgerät unter Verwendung eines 120 Micrometer Naßfilmspiralrakels. Die Trocknung der applizierten Streichfarbe wird unter Verwendung eines Heißluftföns durchgeführt.

Daten der erhaltenen Beschichtungen:

| | | | | |
|---|---|---|---|---|
| Alu C, Zitronensäure, Dissolver nicht beansprucht | 100 Teile | | | |
| Alu C, Zitronensäure, Rotor-Stator-System nicht beansprucht | | 100 Teile | | |
| Alu C, Essigsäure, Dissolver nicht beansprucht | | | 100 Teile | |
| Alu C, Essigsäure, Rotor-Stator-System | | | | 100 Teile |
| PVA 40-88 | 27 Teile | 27 Teile | 27 Teile. | 27 Teile |
| Auftragsverhalten | gut | gut | gut | gut |
| Durchsch. | 40,9 | 40,8 | 40,8 | 40,9 |
| Auftragsgewicht in g / m² und Standardabweichung nicht beansprucht | s = 0,7 | s = 0,7 | s = 0,5 | s = 0,4 |

| | | | | |
|---|---|---|---|---|
| *Bemerkung: Die Drucktests werden mit Beschichtungen durchgeführt, die nahezu das gleiche Beschichtungsgewicht haben. | | | | |

### Beschichtungseigenschaften

| | | | | |
|---|---|---|---|---|
| Aluminiumoxid, Zitronensäure, Dissolver * | 100 Teile | | | |
| Aluminiumoxid, Zitronensäure, Rotor-Stator-System * | | 100 Teile | | |
| Aluminiumoxid, nicht beansprucht Essigsäure, Dissolver | | | 100 Teile | |
| Aluminiumoxid, Essigsäure, Rotor-Stator-System | | | | 100 Teile |
| PVA 40-88 | 27 Teile | 27 Teile | 27 Teile | 27 Teile |
| Haftung, Oberfläche und Glätte des Striches | Gute Haftung auf der Folie, homogene Oberfläche | Sehr gute Haftung auf der Folie, homogene Oberfläche | Sehr gute Haftung auf der Folie, homogene Oberfläche | Sehr gute Haftung auf der Folie, homogene Oberfläche |
| Glanz bei 20°/ Standardabweichung bei n = 5 | 13,6 | 22,6 | 21,8 | 25,9 |
| | s = 0,4 | s = 0,1 | s = 0,3 | s = 0,2 |
| Glanz bei 60 ° / Standardabweichung bei n = 5 | 28,2 | 43,4 | 42,6 | 48,3 |
| | s = 0,2 | s = 0, 3 | s = 0,3 | s = 0,2 |

| | | | | |
|---|---|---|---|---|
| * nicht beansprucht | | | | |

Diskussion der Glanzwerte

Aus den Glanzwerten ist deutlich ersichtlich, daß die erfindungsgemäße Dispersion höhere Glanzwerte in der Inkjet-Beschichtung erzeugt als die andersartig hergestellten Dispersionen. Bei fotorealistischen Beschichtungen ist ein hoher Glanz erwünscht, wie schon in EP 0 732 219 beschrieben. Im Vergleich zu EP 0 732 219 sind die Glanzwerte geringer, dies liegt aber an den unterschiedlichen Verfahren zur Herstellung des Inkjet-Medium und nicht an der Streichfarbe. Es wird bewußt in dieser Untersuchung ein Spiralrakel verwendet, um den Beitrag der Dispersion in der Inkjet-Beschichtung zum Glanz zu ermitteln. Bei dem in EP 0 732 219 verwendeten Cast-coating Verfahren wird der Glanz hauptsächlich durch das Cast-coating Verfahren an sich bestimmt.
Printtest (von 3 unabhängigen Personen bestimmt)
Beste Note: 0,75 schlechteste Note: 6

| Verwendete Dispersion | | Aluminium oxid, Zitronensäure, Dissolver * | Aluminium oxid, Zitronansäure, Rotor-Stator-System * | Aluminiumm-oxid, Essig-säure, Dissolver * | Aluminiumoxid, Essigsäure, Rotor-Stator-System |
|---|---|---|---|---|---|
| | | Vierfarbdruck Hewlett-Packard 550 c | | | |
| Farbintensität | Magenta/Gelb/Cyan | 1,75 | 1,5 | 1,5 | 1 |
| | Schwarz | 1,5 | 1,5 | 1,5 | 1,5 |
| Punktschärfe | Schwarz in Farbe | 1,75 | 1,5 | 1,5 | 1,5 |
| Ubergänge | Farbe in Farbe | 1 | 1 | 1 | 1 |
| | Schwarz in Farbe | 1 | 1,5 | 1 | 1,5 |
| Schrift | | 1,5 | 1 | 1 | 1 |
| | | 1,5 | 1,5 | 1,5 | 1 |
| Halbton | | 1 | 1 | 1 | 1 |
| Fotoqualität | | 1,5 | 1,5 | 1,5 | 1 |
| Summe Bewertung | | 12,5 | 12 | 11,5 | 10,5 |
| Durchschnittsnote | | 1,39 | 1,33 | 1,28 | 1,17 |

| | | Vierfarbdruck Epoon Stylus Color 800 | | | |
|---|---|---|---|---|---|
| Farbintensität | Magenta/Gelb/Cyan | 1,5 | 1 | 1 | 0,75 |
| | Schwarz | 1,5 | 1 | 1 | 1 |
| Punktschärfe | Schwarz in Farbe | 2 | 1,75 | 1,5 | 1,5 |
| Übergänge | Farbe in Farbe | 1,75 | 1,5 | 1,5 | 1 |
| | Schwarz in Farbe | 1,5 | 1,5 | 1 | 1 |
| Konturen | | 1 | 1 | 1 | 1 |
| Schrift | | 1 | 1 | 1 | 1 |
| Halbton | | 1,5 | 1,5 | 1 | 1,5 |
| Fotoquali-tät | | 1, 5 | 1,5 | 1,5 | 1 |
| Summe Bewertung | | 13,25 | 11,75 | 10,5 | 9,75 |
| Durchschnittsnote | | 1,47 | 1,31 | 1,17 | 1,08 |

| | | | | | |
|---|---|---|---|---|---|
| * nicht beansprucht | | | | | |

Bei Verwendung zwei verschiedener Druckertypen ergeben sich für die Beschichtungen die besten Ergebnisse, die die erfindungsgemäße Dispersion enthalten.

### Farbdichten

| | | DIN | | | |
|---|---|---|---|---|---|
| HP 550 C | | Pap Pol | | | |

| | | Filter gewählt | | | |
|---|---|---|---|---|---|
| | Verwendete Dispersion | Aluminiumoxid, Zitronensäure, Dissolver * | Aluminiumoxid, Zitronensäure, Rotor-Stator-System * | Aluminium-oxid, Essigsäure, Dissolver * | Aluminiumoxid, Essigsäure, Rotor-Stator-System |
| Papierweiß | | 0 | 0 | 0 | 0 |
| schwarz | 1. | 2,22 | 2,26 | 2,29 | 2,32 |
| | 2. | 2,21 | 2.29 | 2,26 | 2,35 |
| | 3. | 2,22 | 2,27 | 2,28 | 2,33 |
| yellow | 1. | 1,53 | 1,63 | 1,65 | 1,68 |
| | 2. | 1,54 | 1,60 | 1,65 | 1,67 |
| | 3. | 1,51 | 1,63 | 1,67 | 1,69 |
| cyan | 1. | 2,06 | 2,28 | 2,28 | 2,34 |
| | 2. | 2,07 | 2,31 | 2,31 | 2,36 |
| | 3. | 2.04 | 2,32 | 2.30 | 2,36 |
| magenta | 1. | 1,22 | 1,32 | 1,31 | 1,35 |
| | 2. | 1,24 | 1,34 | 1.31 | 1,38 |
| | 3. | 1,23 | 1.35 | 1,32 | 1,36 |
| Mittelwert schwarz | | 2,22 | 2,27 | 2,28 | 2,33 |
| Mittelwert yellow | | 1,53 | 1.62 | 1,66 | 1.68 |
| Mittelwert cyan | | 2.06 | 2,30 | 2,30 | 2,35 |
| Mittelwert magenta | | 1,23 | 1,34 | 1,31 | 1,36 |
| Summe | | 7,04 | 7,53 | 7,55 | 7,72 |

| | | DIN | | | |
|---|---|---|---|---|---|
| Epson Stylus Color 800 | | Pap Pol | | | |
| | | Filter gewählt | | | |
| | Verwendete Dispersion | Aluminiumoxid, Zitronen-säure, Dissolver * | Aluminiumoxid, Zitronensäure, Rotor-Stator-System * | Aluminium oxid, Essigsäure, Dissolver * | Aluminiumoxid Essigsäure, Rotor-Stator-System |
| Papierweiß | | 0 | 0 | 0 | 0 |
| schwarz | 1. | 2,74 | 3,05 | 3,02 | 3,07 |
| | 2. | 2,73 | 3,06 | 3,03 | 3,09 |
| | 3. | 2,72 | 3,06 | 3,03 | 3,08 |
| yellow | 1. | 2,00 | 2,15 | 2,13 | 2,17 |
| | 2. | 2,02 | 2,14 | 2,14 | 2,19 |
| | 3. | 2,00 | 2,14 | 2,13 | 2,17 |
| cyan | 1. | 2,56 | 3,21 | 3,05 | 3,32 |
| | 2. | 2,59 | 3,19 | 3,06 | 3,31 |
| | 3. | 2,58 | 3,21 | 3,03 | 3,32 |
| magenta | 1. | 2,12 | 2,30 | 2,26 | 2,35 |
| | 2. | 2,13 | 2,31 | 2,25 | 2,32 |
| | 3. | 2,13 | 2,28 | 2,26 | 2,34 |
| Mittelwert schwarz | | 2,73 | 3,06 | 3,03 | 3,08 |
| Mittelwert yellow | | 2,01 | 2,14 | 2,13 | 2,18 |
| Mittelwert cyan | | 2,58 | 3,20 | 3,05 | 3,32 |
| Mittelwert magenta | | 2,13 | 2,30 | 2,26 | 2,34 |
| Summe | | 9,45 | 10,70 | 10,47 | 10,92 |

| | | | | | |
|---|---|---|---|---|---|
| * nicht beansprucht | | | | | |

Bei der Betrachtung der Farbdichten ist erkennbar, daß die Beschichtung, die in der die erfindungsgemäße Dispersion enthalten ist, die höchsten Farbdichten wiedergibt. Dies ist erwünscht, um eine möglichst fotorealistische Wiedergabe zu erhalten.

### Anwendungstechnisches Beispiel 2:

### Edukte:

| | |
|---|---|
| Polyvinylalkohol | Mowiol 40-88 |
| Aluminiumoxid C - | Dispersion (Essigsäure/Rotor-Stator-System) * |
| Aluminiumoxid C - | Dispersion (Essigsäure/Dissolver) * |
| Aluminiumoxid C - | Dispersion (Zitronensäure/Rotor-Stator-System) * |
| Aluminiumoxid C - | Dispersion (Zitronensäure/Dissolver) |

| | |
|---|---|
| * nicht beansprucht | |

Alle Dispersionen werden aus dem gleichen Aluminiumoxid-Pulver hergestellt (gleiche Charge).

Rezeptur und Verfahrensweise zur Herstellung von Inkjet-Streichfarben:

Die wässrige Polyvinylalkohol-Lösung (Mowiol 40-88) mit 12,14 % Feststoffgehalt wird in ein 400 ml Becherglas vorgelegt und mit der Menge Wasser versetzt, mit der man zusammen mit der Aluminiumoxid C-Dispersion einen Feststoffgehalt von w = 0,25 in der Streichfarbe erhält. Bei den vorliegenden Dispersionen läßt sich kein viel höherer Feststoffgehalt in der Streichfarbe erzielen, da dieser durch den Feststoffgehalt der Dispersion und insbesondere der Polyvinylalkohol-Lösung limitiert ist, obwohl die Viskosität gering ist.

Zu der Polyvinylalkohol-Lösung wird mittels einer Pipette die jeweilige Dispersion unter Rühren mit 500 UPM langsam innerhalb von 5 Minuten hinzugetropft. Nach Beendigung der Zugabe läßt man noch 30 Minuten bei 500 UPM nachrühren, um eine homogene Streichfarbe zu erhalten. Danach werden die Streichfarben mittels Exsikkator und Wasserstrahlpumpe entlüftet. Zur Kontrolle bestimmt man nach dem Ansetzen der Streichfarben den Ist - Feststoff, den pH-Wert und die Viskosität.

Die Teile in der untenstehenden Tabelle verstehen sich als Gewichtsteile, bezogen auf den Feststoff.

| | | | | |
|---|---|---|---|---|
| Alu C, Zitronensäure, Dissolver * | 100 Teile | | | |
| Alu C, Zitronensäure, Rotor-Stator-System * | | 100 Teile | | |
| Alu C, Essigsäure, Dissolver * | | | 100 Teile | |
| Alu C, Essigsäure, Rotor-Stator-System | | | | 100 Teile |
| PVA 40-88 | 15 Teile | 15 Teile | 15 Teile | 15 Teile |
| Ist-Feststoffgehalt der Streichfarbe in % | 25,01 | 25,04 | 24,97 | 25,02 |
| pH-Wert | 4,3 | 4, 3 | 4,3 | 4,3 |

| Viskosität, Brookfield in mPa s nach 24 h | | | | |
|---|---|---|---|---|
| 5 UPM | 736 | 488 | 590 | 398 |
| 10 UPM | 626 | 436 | 502 | 366 |
| 20 UPM | 540 | 398 | 464 | 342 |
| 50 UPM | 474 | 362 | 428 | 324 |
| 100 UPM | 438 | 348 | 396 | 302 |
| Bemerkungen zur Streichfarbenherstellung | gut | gut | gut | gut |

| | | | | |
|---|---|---|---|---|
| * nicht beansprucht | | | | |

Aus den erhaltenen Viskositätsdaten läßt sich erkennen, daß man mit der Kombination Essigsäure/Rotor-Stator-System die niedrigsten Viskositäten erhält. Dies ist erwünscht, weil man den Feststoffgehalt der Streichfarbe noch weiter erhöhen kann, ohne zu hohe Viskositäten zu erhalten, auf Grund derer die Streichfarben sich nicht mehr applizieren lassen.

Verfahrensweise zur Herstellung einer Inkjet-Beschichtung aus der zuvor genannten Inkjet-Streichfarbe Das Beschichten von mattgestrichenem 110 g/m² Inkjet-Papier (Zweckform No. 2576) erfolgt mit einem Erichsen-Rakelgerät unter Verwendung eines 40 Micrometer Naßfilmspiralrakels. Die Trocknung der applizierten Streichfarbe wird unter Verwendung eines Heißluftföns durchgeführt.

Danach werden die Beschichtungen dreimal bei 10 bar Druck und 50°C mit einem Laborkalander von Gradek Oy kalandriert.

Daten der erhaltenen Beschichtungen:

| | | | | |
|---|---|---|---|---|
| Alu C, Zitronensäure, Dissolver nicht beansprucht | **100 Teile** | | | |
| Alu C, Zitronensäure, Rotor-Stator-System nicht beansprucht | | **100 Teile** | | |
| Alu C, Essigsäure, Dissolver nicht beansprucht | | | **100 Teile** | |
| Alu C, Essigsäure, Rotor-Stator-System | | | | **100 Teile** |
| PVA 40-88 | **15 Teile** | **15 Teile** | **15 Teile** | **15 Teile** |
| Auftragsverhalten | gut | gut | gut | gut |
| Durchsch. Auftragsgewicht in g / m² und Standardabweichung | 12,2 | 12,3 | 12,2 | 12,1 |
| | s = 0,3 | s = 0,2 | s = 0,2 | s = 0,3 |

| | | | | |
|---|---|---|---|---|
| * Bemerkung: Die Drucktests werden mit Beschichtungen durchgeführt, die nahezu das gleiche Beschichtungsgewicht haben. | | | | |

### Beschichtungseigenschaften

| | | | | |
|---|---|---|---|---|
| Aluminiumoxid, Zitronensäure, Dissolver * | **100 Teile** | | | |
| Aluminiumoxid, Zitronensäure, RotorStator-System * | | **100 Teile** | | |
| Aluminium-oxid, Essigsäure, Dissolver | | | **100 Teile** | |
| Aluminiumoxid, Essigsäure, Rotor-Stator-System | | | | **100 Teile** |
| PVA 40-88 | **15 Teile** | **15 Teile** | **15 Teile** | **15 Teile** |
| Haftung, Oberfläche und Glätte des Striches | Sehr gute Haftung auf dem Papier, homogene Oberfläche | Sehr gute Haftung auf dem Papier, homogene Oberfläche | Sehr gute Haftung auf dem Papier, homogene Oberfläche | Sehr gute Haftung auf der Papier, homogene Oberfläche |
| **Glanz bei 20°/ Standardabweichung bei n = 5** | 4,1 | 4,6 | 4,3 | 4,9 |
| | s = 0,4 | s = 0,1 | s = 0,3 | s = 0,2 |
| **Glanz bei 60°/ Standardabweichung bei n = 5** | 16,3 | 22,6 | 23,0 | 24,2 |
| | s = 0,2 | s = 0,3 | s = 0,3 | s = 0,2 |

| | | | | |
|---|---|---|---|---|
| * nicht beansprucht | | | | |

### Diskussion der Glanzwerte

Aus den Glanzwerten ist deutlich ersichtlich, daß die erfindungsgemäße Dispersion höhere Glanzwerte in der Inkjet-Beschichtung als die anderen Dispersionen ergibt. Bei fotorealistischen Beschichtungen ist ein hoher Glanz erwünscht, wie schon in EP 0 732 219 beschrieben. Im Vergleich zu EP 0 732 219 sind die Glanzwerte geringer. Dies liegt an den unterschiedlichen Verfahren zur Herstellung des Inkjet-Mediums, und jedoch nicht an der Streichfarbe. Es wird in dieser Untersuchung ein Spiralrakel verwendet, um den Beitrag der Dispersion in der Inkjet-Beschichtung zum Glanz zu ermitteln. Bei dem gemäß EP 0 732 219 verwendeten Cast-coating Verfahren wird der Glanz hauptsächlich durch das Verfahren an sich bestimmt.
Printtest (von 3 unabhängigen Personen bestimmt)

| | | | |
|---|---|---|---|
| Beste Note: | 0,75 | schlechteste Note: | 6 |

| **Verwendete Dispersion** | | **Aluminiumoxid, Zitronensäure, Dissolver *** | **Aluminiumoxid, Zitronensäure, RotorStator-System *** | **Aluminiumoxid, Essigsäure, Dissolver *** | **Aluminiumoxid, Essigsäure, Rotor-Stator-System** |
|---|---|---|---|---|---|
| | | **Vierfarbdruck Hewlett-Packard 550 C** | | | |
| Farbintensität | Magenta/ Gelb/ Cyan | 2 | 1,75 | 1,75 | 1,25 |
| | Schwarz | 1,5 | 1,5 | 1,5 | 1,5 |
| **Punktschärfe** | Schwarz in Farbe | 1,5 | 1,25 | 1,25 | 1,25 |
| Übergänge | Farbe in Farbe | 1 | 1 | 1 | 1 |
| | Schwarz in Farbe | 1 | 1,25 | 1 | 1 |
| **Konturen Schrift** | | 1,5 | 1 | 1 | 1 |
| | | 1,5 | 1,5 | | 1 |
| **Halbton** | | 1 | 1 | 1,25 1 | |
| **Fotoqualität** | | 1,5 | 1,5 | 1,5 | 1 |
| **Summe Bewertung** | | 12,5 | 11,75 | 11,25 | 10,5 |
| **Durchschnittsnote** | | 1,39 | 1,31 | 1,25 | 1,11 |

| | | **Vierfarbdzuck Epson Stylus Color 800** | | | |
|---|---|---|---|---|---|
| Farbintensität | Magenta/ Gelb/Cyan | 1,75 | 1,25 | 1,25 | 1 |
| | Schwarz | 1,5 | 1 | 1 | 1 |
| **Punktschärfe** | Schwarz in Farbe | 1,5 | 1,25 | 1,25 | 1,25 |
| **Übergänge** | Farbe in Farbe | 1,25 | 1 | 1 | 1 |
| | Schwarz in Farbe | 1,25 | 1,25 | 1 | 1 |
| **Konturan** | | 1 | 1 | 1 | 1 |
| | 1 | 1 | 1 | 1 | 1 |
| **Halbton** | | 1,5 | 1,5 | 1 | 1 |
| **Fotoqualität** | | 1,5 | 1,5 | 1,5 | 1,25 |
| **summe Bewertung** | | 12,25 | 10,75 | 10 | 9,5 |
| **Durchschnittsnote** | | 1,36 | 1,19 | 1,11 | 1,06 |

| | | | | | |
|---|---|---|---|---|---|
| * nicht beansprucht | | | | | |

Bei Verwendung zweier verschiedener Druckertypen ergeben sich für die Beschichtungen, die die erfindungsgemäße Dispersion enthalten, die besten Ergebnisse.

### Farbdichten

| | | | | | |
|---|---|---|---|---|---|
| | | DIN | | | |
| HP 550 C | | Pap Pol | | | |
| | | Filter gewählt | | | |

| | **Verwendete Dispersion** | **Alumini-umoxid, Zitronensäure, Dissolver*** | **Aluminiumoxid, Zitronensäure, Rotor-Stator-System*** | **Aluminiumoxid, Essigsäure, Dissolver*** | **Aluminiumoxid, Essigsäure, Rotor-Stator-System** |
|---|---|---|---|---|---|
| Mittelwert schwarz | | 2,03 | 2,06 | 2,08 | 2,12 |
| Mittelwert yellow | | 1,36 | 1,51 | 1,53 | 1,58 |
| Mittelwert cyan | | 1,87 | 2,07 | 2,03 | 2,10 |
| Mittelwert magenta | | 1,16 | 1,28 | 1,26 | 1,29 |
| Summe | | 6,42 | 6,92 | 6,90 | 7,09 |
| | | DIN | | | |
| Epson Stylus Color 800 | | Pap Pol | | | |
| | | Filter gewählt | | | |

| | Verwendete Dispersion | Aluminiumoxid, Zitronensäure, Dissolver * | Aluminiumoxid Zitronensäure, Rotor-Stator-System * | Aluminumoxid, Essigsäure, Dissolver * | Aluminiumoxid, Essigsäure, Rotor-Stator-System |
|---|---|---|---|---|---|
| Mittelwert schwarz | | 2,32 | 2,74 | 2,76 | 2,89 |
| Mittelwert yellow | | 1,77 | 2,03 | 2,01 | 2,05 |
| Mittelwert cyan | | 2,36 | 2,86 | 2,79 | 2,88 |
| Mittelwert magenta | | 1,96 | 2,13 | 2,14 | 2,20 |
| Summe | | 8,41 | 9,76 | 9,7 | 10,02 |

| | | | | | |
|---|---|---|---|---|---|
| * nicht beansprucht | | | | | |

Bei der Betrachtung der Farbdichten ist erkennbar, daß die Beschichtung, in der die erfindungsgemäße Dispersion enthalten ist, die höchsten Farbdichten wiedergibt. Dies ist erwünscht, um eine möglichst fotorealistische Wiedergabe zu erhalten.

Anhand der Anwendungsbeispiele wird deutlich, daß die erfindungsgemäße Dispersion gegenüber anderen Dispersionen, die mit einer anderen Säure und / oder einem anderen Dispergieraggregat hergestellt werden, hinsichtlich des Einsatzes zum Beispiel in Ink-Jet- Medien überlegen ist.

**Beurteilungstabelle für Vierfarbdruck (Black and Colour)**

| **Farbinbensität (Colour Statistic)** | | | | **Punktachärfe (Featharing)** | | **Übergänge (Colour Bleed)** | | | | **Kant.-schärfe (Acuity/Bleeding /Wicking/Feat.)** | | | **Schriftbild (Wicking/ Feathering)** | | **Halbton (Halftone)** | | **Visualle Bildqualität (Illustration Quality)** |
|---|---|---|---|---|---|---|---|---|---|---|---|---|---|---|---|---|---|
| **Oyan./Gelb (OMf)** | | **(K)** | | **K in CMf** | | **CMY/CMY** | | | **K/CMY** | | | | | | | | |
| 1+ | leuchtend ,kräftig intensiv | | | | | | | | | | | | | | | | |
| 1 | matt, kräftig intensiv | 1 | voller Farbton, kräfting intensiv, samtig | 1 | klare Trennung, sehr gute bis gute Schärfe | 1 | klare Trennung, klar abgegrenzt | 1 | klare Trennung, klar abgegrenzt | 1 | Balken 1 klar, fein | 1 | Buchstaben in allen Schriften/Größen scharf-sehr scharf | 1 | Grauton optimal deutlich, Feinlinien abgegrenzt | 1 | Details erkernbar, Farbschattiengen, Faube, Kontraste, Bildschärfe gut, Dots scharf |
| 2 | matt, blaß | 2 | intensiver schwarzer Farbton | 2 | leichter Verlauf von schwarz, noch gute bis gute bis mittlere schärfe | 2 | leichter Verlauf, noch gute Abgrenzung | 2 | leichter Verlauf, noch gute Abgrenzung | 2 | Balken 1 etwas unscharf, Balken 3 deutlich scharf | 2 | Buchstaben mir in Farbe bei allen Schriften/Größen scharf-sehr scharf | 2 | Grautöne etwas dunkler/verschwomen, Feiniinien abgegrenzt | 2 | Details nicht erkennbar, Fabschattierungen unscharf, Farbe, Kontraste, Bildschäfe gut, Dots scharf |
| 3+ | leuchtend fleckig | | | | | | | | | | | | | | | | |
| 3 | kräftig intensiv, mamoriert | 3 | matt, blaß, etwas fleckig | 3 | schwarze Rander unscharf | 3 | verlaufen, etwas verschwommen, Mischfarben | 3 | Verlauf von schwarzer Farbe, Ränder unscharf | 3 | Balken 3 klar, Balken 4 klar | 3 | B. mur bei großen Schriften scharf | 3 | Grauton optimal deutlich, Feinlinien verschwommen | 3 | Details nicht erkennbar, Farbschattienngen, Dots Farbe fehlerhaft, Kontraste, Bildschärfe gut |
| 3- | matt, fleckig | | | | | | | | | | | | | | | | |
| 4 | matt, mamoriert | 4 | ausgewaschener, blasser, Farbton, etwas fleckig | 4 | ausgeblutet, verlaufen, verschowomen | 4 | vernehrt Mischfarben, verachwommen | 4 | verlaufen, verschwommen, kein Rand erkennbar | 4 | Balken 4 scharf, Balken 3 unscharf | 4 | Ränder unsdiart, nur bei Schwarz etwas ausgeblutet | 4 | Grauton verschwommen, Feinlinien verSchwommen | 4 | Details nicht erkennbar, Farbschattierungen, Dots, Kontraste unschart, Farbe fehlerhaft, Bildschärfe gut |
| 5 | blaß, mamoriert | 5 | stark marmoriert | 5 | starker Verlauf, kaum leserlich | 5 | starker Verlauf | 5 | Schwarz dringt flächig ein | 5 | Balken 4 unscharf, Balken 6 klar | 5 | Rändrr unscharf, bei Farbe und Schwarz ausgeblutet | 5 | Grauon c1InJcel bis schwarz, Feinlinien verschwommen | 5 | Details nicht erkernbar, Farbschattienngen, Dots, Kontraste unscharf, Farbe, Bildschärfe fehlerhaft |
| 6 | sehrmatt u./o. mamoriert | 6 | sehr stark ausgewaschener Farb/Hlabu./o. mamoriert | 6 | sehr starker Verlauf, unscharf, unleserlich | 6 | sehr starker Farbverlauf, neue Farbtöne | 6 | Mischfarbe bildet sich | 6 | Balken 6 verschwommen | 6 | Texte bei kleinen Schriften unleserlich | 6 | Grauton schwarz darchgefärbt, Feinlinien kaum erkennbar | 6 | Bild kaum erkennbar |

Die Gesamtauswertung zeigt folgendes Bild:
◆ die besten Ergebnisse für Beschichtungen, deren Dispersionen mit einem Ultra-Turrax hergestellt worden sind,
◆ Unterschiede zwischen den Systemen Zitronensäure/Ultra Turrax und Essigsäure/Ultra Turrax treten bei einzelnen Parametern der Druckauswertung auf, tendenziell bessere Farbintensität für Essigsäure, dafür tendenziell bessere Auflösung für Zitronensäure; in der Gesamtsumme der Drucktests sind sie ungefähr gleich,
◆ vermehrte Rißbildung beim anwendungstechnischen Beispiel 1, bei Verwendung von Zitronensäure im Vergleich zu Essigsäure und Dissolver im Vergleich zu Ultra-Turrax.

Die Auswertung des Vierfarbdrucks beim Hewlett-Packard 550 C zeigt :
◆ Vorteile hinsichtlich der Farbintensität Farbe für die Beschichtungen , die aus der Aluminiumoxid-Dispersion, welche mit Essigsäure/UltraTurrax hergestellt worden ist, gegenüber den anderen Beschichtungen,
◆ die oben genannte Dispersion schneidet minimal schlechter bei der Punktschärfe gegenüber den anderen Beschichtungen ab; auch die Bleedingneigung ist stärker,
◆ bezüglich Übergänge (Bleeding) schneidet die Beschichtung, die aus der Aluminiumoxid-Dispersion, welche mit Zitronensäure und Ultra-Turrax hergestellt worden ist, am besten ab,
◆ bei der Schärfe mit jeweils einer Farbe (Konturen/Schriftbild) ist die Beschichtung, die aus der Aluminiumoxid-Dispersion mit Essigsäure und Ultra-Turrax hergestellt worden ist, geringfügig gegenüber den anderen Beschichtungen im Vorteil,
◆ die Beschichtungen, deren Dispersion mit einem Ultra-Turrax hergestellt worden sind, schneiden insgesamt besser als die anderen Streichfarben ab; insbesondere die Beschichtung, deren Dispersion mit Zitronensäure und einem Dissolver hergestellt worden ist, ist schlechter.

Die Auswertung des Vierfarbdrucks beim EPSON Stylus Color 800 zeigt:
◆ Vorteile für Beschichtungen, deren Aluminiumoxid-Dispersion mit Hilfe von Essigsäure und Ultra-Turrax hergestellt worden ist, bezüglich Farbintensität Farbe gegenüber den anderen Beschichtungen, das schlechteste Ergebnis für die Beschichtung, deren Aluminium-Dispersion mit Hilfe von Zitronensäure und Dissolver hergestellt worden ist
◆ Bessere Ergebnisse für Beschichtungen, deren Aluminiumoxid-Dispersion mit einem Ultra-Turrax hergestellt worden sind, hinsichtlich Farbintensität schwarz
◆ die Punktschärfe schwarz in Farbe nimmt nimmt bei den Beschichtungen, deren Aluminiumoxid-Dispersion mit Hilfe von Essigsäure/Ultra-Turrax hergestellt worden ist, über die Beschichtung, deren Dispersion mit Hilfe von Essigsäure und Dissolver hergestellt, über die Beschichtung, deren Aluminiumoxid-Dispersion mit Hilfe von Zitronensäure und einem Ultra-Turrax hergestellt worden ist, bis zur Beschichtung, deren Aluminiumoxid-Dispersion mit Hilfe Zitronensäure und Dissolver hergestellt worden ist, kontinuierlich zu
◆ die Übergänge (Bleeding) schwarz in Farbe sind bei den Beschichtungen besser, deren Aluminiumoxid-Dispersionen mit Zitronensäure hergestellt worden sind
◆ die Beschichtung, deren Aluminiumoxid-Dispersion mit Zitronensäure und einem Dissolver hergestellt worden ist, ist in den Disziplinen (Punktschärfe, Übergänge) bei denen es auf Saugfähigkeit ankommt, wahrscheinlich aufgrund der Risse, den anderen Beschichtungen überlegen
◆ die Beschichtungen, die mit einem Ultra-Turrax hergestellt worden sind, schneiden in ihrer Gesamtheit besser als die jeweiligen Beschichtungen ab, deren Dispersionen mit einem Dissolver hergestellt worden sind

Ergänzungen zu den Dispersionen:
Aluminiumoxid C Dispersion, La 1065 (Essigsäure/Ultra-Turrax)
Aluminiumoxid C Dispersion, La 1066 (Essigsäure/Dissolver) nicht beansprucht
Aluminiumoxid C Dispersion, La 1068 (Zitronensäure/Ultra-Turrax)

### Produkt:

### Fotorealistische, glänzende Inkjet-Beschichtungen

### Edukt:

### Polyesterfolie

Polyvinylalkohol Mowiol 40-88
Aluminiumoxid C - Dispersion nicht beansprucht
Aluminiumoxid C - Dispersion (Essigsäure/Dissolver) nicht beansprucht
Aluminiumoxid C - Dispersion (Zitronensäure/UT) nicht beansprucht
Aluminiumoxid C - Dispersion (Zitronensäure/Dissolver) nicht beansprucht
alle Dispersionen sind aus dem Aluminiumoxid C-Pulver hergestellt worden.

### Versuchsdurchführung und Meßergebnisse

### Streichfarbenherstellung

Die wässrige Polyvinylalkohol-Lösung (Mowiol 40-88) mit 10,87 % Feststoffgehalt wird in ein 400 ml Becherglas vorgelegt und mit der Menge Wasser versetzt, die zusammen mit den Aluminiumoxid C-Dispersionen einen möglichst hohen Feststoffgehalt in der Streichfarbe bei einer verarbeitbaren Viskosität und den gleichen Feststoffgehalten ergibt. Bei den vorliegenden Dispersionen läßt sich kein viel höherer Feststoffgehalt in der Streichfarbe erzielen, da dieser durch den Feststoffgehalt der Dispersion limitiert ist, obwohl die Viskosität gering ist. Aus der Erfahrung zeigt sich, daß Streichfarben mit Viskositäten von 500 +/- 100 mPa, bei 100 UPM mit einem Brookfield-Viskosimeter gemessen, über ein sehr gutes Auftragsverhalten für glänzende Beschichtungen verfügen.

Zu der Polyvinylalkohol-Lösung wird mittels einer Pipette die jeweilige Dispersion unter Rühren mit 500 UPM langsam innerhalb von 5 Minuten hinzugetropft. Nach Beendigung der Zugabe läßt man noch 30 Minuten bei 500 UPM nachrühren, um eine homogene Streichfarbe zu erhalten. Danach werden die Streichfarben mittels Exsikkator und Wasserstrahlpumpe entlüftet. Dies gelingt aber durch das unzureichende Vakuum nur unvollständig.

Zur Kontrolle wird nach dem Ansetzen der Streichfarben der Ist - Feststoff, pH-Wert und Viskosität bestimmt.

Die Teile in der untenstehenden Tabelle verstehen sich als Gewichtsteile, bezogen auf den Feststoff. Es wird versucht, den Feststoffgehalt der Streichfarben einheitlich auf 22 % einzustellen.

**Tabelle 1:Streichfarbenkennwerte**

| Ansatz-Nr. | | # 917 | # 918 | # 919 | # 920 |
|---|---|---|---|---|---|
| Alu C, La 1065 | | 100 Teile | | | |
| Alu C, La 1066 * | | | 100 Teile | | |
| Alu C, La 1068 * | | | | 100 Teile | |
| Alu C, La 1069 | | | | | 100 Teile |
| PVA 40-88 | | 23 Teile | 23 Teile | 23 Teile | 23 Teile |
| Ist-Feststoffgehalt der Streichfarbe in % | | 21,82 | 21,85 | 21,92 | 21,88 |
| pH-Wert | | 4,2 | 3,9 | 4,3 | 4,5 |

| Viskosität, Brookfield in mPa s nach 24 h | | | | | |
|---|---|---|---|---|---|
| Nach Aufrühren | 5 UPM | 368 | 568 | 320 | 736 |
| | 10 UPM | 360 | 556 | 330 | 692 |
| | 20 UPM | 352 | 542 | 315 | 644 |
| | 50 UPM | 349 | 525 | 298 | 584 |
| | 100 UPM | 338 | 344 | 285 | 398 |
| Bemerkungen zur Streichfarbenherstellung | | gut | gut | gut | gut |

| | | | | | |
|---|---|---|---|---|---|
| * Nicht beansprucht | | | | | |

Die Streichfarben, deren Dispersionen mit einem Ultra-Turrax hergestellt worden sind, zeigen eine geringere Strukturviskosität, erkennbar an den niedrigeren Viskositätszahlen bei 5 und 10 UPM, als die Streichfarben, deren Dispersionen mit einem Dissolver hergestellt worden sind.

Bei geringeren Scherkräften, wie sie bei der Dissolver-Dispergierung auftreten, ist der Einfluß der verwendeten Säure erkennbar. Die Verwendung von Essigsäure ergibt niedrigere Viskositäten.

### Streichen

**Tabelle 2: Streicheigerischaften**

| Ansatz-Nr. | # 917 | # 918 | # 919 | # 920 |
|---|---|---|---|---|
| Alu C, La 1065 | 100 Teile | | | |
| Alu C, La 1066 nicht beansprucht | | 100 Teile | | |
| Alu C, La 1068 nicht beansprucht | | | 100 Teile | |
| Alu C, La 1069 nicht beansprucht | | | | 100 Teile |
| PVA 40-88 | 23 Teile | 23 Teile | 23 Teile | 23 Teile |
| Auftragsverhalten | gut, etwas zu dünnflüssig | gut, etwas zu dünnflüssig | gut, etwas zu dünnflüssig | gut |
| Durchsch. Auftragsgewicht in g/m² und Standardabweichung | 39,2 | 38,7 | 39,3 | 39,1 |
| | s = 0,7 | s = 0,7 | s = 0, 5 | s = 0,4 |

| | | | | |
|---|---|---|---|---|
| * Bemerkung: Die Drucktests werden mit Beschichtungen durchgeführt, die nahezu das gleiche Beschichtungsgewicht haben. | | | | |

Das Streichen der Proben erfolgt mit einem Erichsen-Rakelgerät mittels eines 120 Mikrometer. Naßfilmspiralrakels, um ein ähnliches Beschichtungsgewicht zu erhalten.

Die beschichteten Folien werden ausschließlich mit einem Haarfön getrocknet, um die Microrißbildung zu minimieren.

### Beschichtungseigenschaften

**Tabelle 3: Beschichtungseigenschaften**

| Ansatz-Nr. | # 917 | # 918 | # 919 | # 920 |
|---|---|---|---|---|
| Alu C, La 1065 | 100 Teile | | | |
| Alu C, La 1066 nicht beansprucht | | 100 Teile | | |
| Alu C, La 1068 nicht beansprucht | | | 100 Teile | |
| Alu C, La 1069 nicht beansprucht | | | | 100 Teile |
| PVA 40-88 | 23 Teile | 23 Teile | 23 Teile | 23 Teile |
| Haftung, Oberfläche und Glätte des Striches | Sehr gute Haftung auf der Eblie, kleine Vertiefungen auf der Oberfläche (wahrscheinlich Benetzungsstö -rungen), kaum Microrisse | gute Haftung auf der Fblie, aber viele große, lange Makrorisse | gute Haftung, kleine Vertiefungen auf der Oberfläche (wahrscheinlich Benetzungsstö -rungen), viele kleine Microrisse | Befriedigende Haftung, Beschichtung ist vollständig mit Rissen durchsetzt |
| Glanz* bei 20°/ Standardabweichung bei n = 5 | 14,5 | 7,9 | 26,8 | 18,4 |
| | s = 0,4 | s = 0,1 | s = 2, 0 | s = 0,5 |
| Glanz* bei 60 ° / Standardabweichung bei n=5 | 28,2 | 18,3 | 43,1 | 19,8 |
| | s = 0,2 | s = 0,4 | s = 0,7 | s = 1,7 |

| | | | | |
|---|---|---|---|---|
| * Die Risse in den Beschichtungen können die Glanzwerte verfälschen. | | | | |

### Diskussion zur Rißbildung

Die Anzahl und die Größe der Risse läßt auch auf die Eignung der verschiedenen Dispersionen schließen. # 917 und # 919, welche die wenigsten Risse enthalten, werden mit Dispersionen hergestellt, die mit Hilfe eines Ultra-Turrax dispergiert worden sind. # 918 und # 920, welche die meisten Risse aufweisen, werden mit Dispersionen hergestellt, die mit Hilfe eines Dissolver dispergiert worden sind. Dies bedeutet, der Ultra-Turrax ist einem Dissolver hinsichtlich Rißbildung vorzuziehen.

Die Tendenz der Rißanzahl steigt von # 917 zu # 919 bzw. # 918 zu # 920 an, was bedeutet, daß die Art der Säure auch einen Einfluß auf die Rißbildung hat. Die Essigsäure, die für die Dispersionen, die in den Beschichtungen # 917 und # 918 Verwendung fand, ist also besser geeignet.

### Diskussion der Glanzwerte

# 917 und # 919, beide Dispersionen werden mit einem Ultra-Turrax hergestellt, zeigen die höchsten Glanzwerte.

# 918 und # 920, die Dispersionen werden mit einem Dissolver hergestellt, zeigen niedrigere Glanzwerte.

Der Glanz ist interessanterweise bei Beschichtungen mit Zitronensäure höher als bei Beschichtungen mit Essigsäure. Es ist aber möglich, daß die Risse, die bei Verwendung von Zitronensäure häufiger auftreten, die Werte verfälschen, da an der Rißstelle der Glanz der Polyesterfolie gemessen wird.

Es werden Printtests nach Prüfvorschrift Nr.2/143 durchgeführt und die Farbdichten der Ausdrucke gemessen. Auf den Aufsaugtest für Inkjet-Tinten wurde verzichtet, da die erhaltenen Meßwerte durch die massiven Microrisse stark verfälscht werden würden. Die Tinte würde in die Risse laufen, was eine schnelle Absorption vortäuschen würde.

Die Gesamtauswertung erfolgt zum anderen auch per grafischer Darstellung, in der alle Druckergebnisse kumuliert werden:

Durchschnittsnoten der einzelnen Drucktests werden direkt als Werte eingetragen,

Glanzwerte bei 20° und 60° werden addiert. Der Wert 100 wird durch diese Summe geteilt, um eine Glanznote zu erhalten, die vergleichbar mit den anderen Noten ist.

So erhält man eine annähernd gleiche Gewichtung der einzelnen Tests bei "schlecht- und bestmöglichsten" Testergebnissen der jeweiligen Methode.

Die Ergebnisse der einzelnen Bewertungsparameter lassen eine Interpretation hinsichtlich der Eignung der verwendeten Säuren beziehungsweise Dispergieraggregate zu. Die Ergebnisse beziehungsweise die Interpretation wäre noch aussagekräftiger, wenn die Beschichtungen keine Microrisse aufzeigen würden.

**Tabelle 4: Printtest (von 3 unabhängigen Personen bestimmt)**

| **Ansatz-Nr.** | | **# 917** | **# 918 nicht beansprucht** | **# 919 nicht beansprucht** | **# 920 nicht beansprucht** |
|---|---|---|---|---|---|
| Vierfarbdruck Hewlett-Packard 550 C | | | | | |
| **Farbintensität** | Magenta/Gelb/Cyan | 1 | 1,5 | 1,5 | 1,5 |
| | Schwarz | 1,5 | 1,5 | 1,5 | 2 |
| **Punktschärfe** | Schwarz in Farbe | 1,75 | 1, 5 | 1, 5 | 1,5 |
| **Übergänge** | Farbe in Farbe | 1 | 1, 5 | 1 | 1, 5 |
| | Schwarz in Farbe | 1,5 | 1,5 | 1 | 1,5 |
| **Konturen** | | 1 | 1,5 | 1 | 1,5 |
| **Schrift** | | 1 | 1,5 | 1,5 | 1,75 |
| **Halbton** | | 1 | 1 | 1 | 1,5 |
| **Fotoqualität** | | 1,5 | 1,5 | 1,5 | 2 |
| **Summe Bewertung** | | 11,25 | 13 | 11,5 | 14,75 |
| **Durchschnittsnote** | | 1,25 | 1,44 | 1,28 | 1,64 |

| Vierfarbdruck Epson Stylus Color 800 | | | | | |
|---|---|---|---|---|---|
| **Farbintensität** | Magenta/Gelb/Cyan | 0,75 | 1 | 1 | 1,5 |
| | Schwarz | 1 | 1,5 | 1 | 1,5 |
| **Punktschärfe** | Schwarz in Farbe | 2 | 1,75 | 1,5 | 1 |
| **Übergänge** | Farbe in Farbe | 1,5 | 1,75 | 1,5 | 1 |
| | Schwarz in Färbe | 1, 5 | 1,5 | 1 | 1 |
| **Konturen** | | 1 | 1,5 | 1 | 1 |
| **Schrift** | | 1 | 1 | 1 | 1,5 |
| **Halbton** | | 1,5 | 1,5 | 1 | 1,5 |
| **Fotoqualität** | | 1 | 1,5 | 1 | 1,5 |
| **Summe Bewertung** | | 11,25 | 13 | 10 | 11,5 |
| **Durchschnittsnote** | | 1,25 | 1,44 | 1,11 | 1,28 |

**Tabelle 5: Farbdichten**

| | | | | | |
|---|---|---|---|---|---|
| HP 550 C | | DIN | | | |
| | | Pap Pol | | | |
| | | Filter gewählt | | | |

| | | **# 917/4** | **# 918/5*** | **#919/1*** | **#920/7*** |
|---|---|---|---|---|---|
| **Papierweiß** | | 0 | 0 | 0 | 0 |
| **schwarz** | 1. | 2,30 | 2,33 | 2,32 | 2,05 |
| | 2. | 2,27 | 2,35 | 2,26 | 1,95 |
| | 3. | 2,30 | 2,33 | 2,28 | 2,05 |
| **yellow** | 1. | 1,65 | 1,64 | 1,59 | 1,44 |
| | 2. | 1,67 | 1,60 | 1,58 | 1,37 |
| | 3. | 1,66 | 1,63 | 1,59 | 1,31 |
| **cyan** | 1. | 2,32 | 2,24 | 2,23 | 1,91 |
| | 2. | 2,26 | 2,32 | 2,22 | 1,97 |
| | 3. | 2,32 | 2,33 | 2,19 | 1,92 |
| **magenta** | 1. | 1,26 | 1,30 | 1,22 | 1,09 |
| | 2. | 1,24 | 1,25 | 1,20 | 1,10 |
| | 3. | 1,25 | 1,27 | 1,22 | 1,08 |
| **Mittelwert schwarz** | 2,29 | 2,34 | 2,29 | 2,02 | |
| **Mittelwert yellow** | 1,66 | 1,62 | 1,59 | 1,37 | |
| **Mittelwert cyan** | 2,30 | 2,30 | 2,21 | 1, 93 | |
| **Mittelwert magenta** | 1,25 | 1,27 | 1,21 | 1,09 | |
| **Summe** | 7,5 | 7,53 | 7, 3 | 6,41 | |
| Epson Stylus Color 800 | | DIN | | | |

| | | Pap Pol | | | |
|---|---|---|---|---|---|
| | | Filter gewählt | | | |
| | | **917/1** | **918/7 *** | **919/3 *** | **920/6 *** |
| **Papierweiß** | | 0 | 0 | 0,01 | 0 |
| **schwarz** | **1.** | 3,07 | 2,92 | 3,05 | 2,52 |
| | **2.** | 3,03 | 2,94 | 3,04 | 2,36 |
| | **3.** | 3,08 | 2,63 | 3,08 | 2,31 |
| **yellow** | **1.** | 2,14 | 2,04 | 2,13 | 1,95 |
| | **2.** | 2,19 | 1, 97 | 2,20 | 1,94 |
| | **3.** | 2,15 | 2,01 | 2,24 | 1,95 |
| **cyan** | **1.** | 3,32 | 3,19 | 3,14 | 2,11 |
| | **2.** | 3,31 | 3,20 | 3,06 | 2,32 |
| | **3.** | 3,30 | 3,03 | 3,03 | 2,46 |
| **magenta** | **1.** | 2,34 | 2,15 | 2,25 | 1,87 |
| | **2.** | 2,31 | 2,20 | 2,22 | 1,83 |
| | **3.** | 2,33 | 2,23 | 2,13 | 1,93 |
| **Mittelwert schwarz** | | 3,06 | 2,83 | 3,06 | 2,40 |
| **Mittelwert yellow** | | 2,16 | 2,01 | 2,19 | 1,95 |
| **Mittelwert cyan** | | 3,31 | 3,14 | 3,08 | 2,30 |
| **Mittelwert magenta** | | 2,33 | 2,19 | 2,20 | 1,88 |
| **Summe** | | 10,86 | 10,17 | 10,53 | 8,53 |

| | | | | | |
|---|---|---|---|---|---|
| * nicht beansprucht | | | | | |

### Diskussion der Farbdichten

### a) HP 550 C

Bei der Bewertung der Farbdichten der HP 550 C -Ausdrucke fällt auf, daß die Beschichtungen # 917 und # 918, die höchsten Farbdichten zeigen. Da die für diese Beschichtungen verwendeten Dispersionen mit der gleichen Säure (Essigsäure) hergestellt worden sind, ist der Einfluß der Säure offensichtlich. Die Beschichtung # 919 zeigt im Vergleich dazu geringere Farbdichten. Die in dieser Streichfarbe verwendete Dispersion wird mit Hilfe von Zitronensäure und eines Ultra-Turrax Dispergieraggregates hergestellt.

Die Beschichtung # 920, deren Dispersion mit Zitronensäure und einem Dissolver hergestellt wurde, zeigt eine deutlich geringere Farbdichte, was auch auf die starke Riß-Bildung zurück geführt werden kann.

Essigsäure ergibt bei diesen Aluminiumoxid C-Dispersionen höhere Farbdichten als die Dispersionen, die mit Zitronensäure hergestellt werden.

# 917 und # 918 werden mit unterschiedlichen Dispergieraggregaten aber mit einer Säure hergestellt. Beide Beschichtungen besitzen aber ähnlich hohe Farbdichten. Es scheint bei der Verwendung der richtigen Säure (Essigsäure) möglich zu sein, den Einfluß der Dispergiertechnologie zu relativieren. Dies läßt schließen, daß bei dieser Art von Tinte und der verwendeten Streichfarbenformulierung die Art der Dispergierung nicht signifikant ist.

Wenn man die Kombination # 917 / # 919 mit der Kombination # 918 /# 920 vergleicht, so läßt sich folgendes vermuten:

Je höher die Scherkräfte während der Dispergierung, desto kleiner scheint der Einfluß der Säure zu sein.

### b) Epson Stylus Color 800

Bei der Bewertung der Farbdichten der Epson Stylus Color 800-Ausdrucke fällt im Vergleich zu den HP 550 C-Ausdrucken auf, daß die Farbdichten auf einem viel höheren Niveau liegen. Desweiteren wird der Einfluß der verwendeten Säure in der Dispersion deutlicher. Die Beschichtungen # 917 / # 918 (Essigsäure) besitzen höhere Farbwerte als die jeweils analog dispergierten Beschichtungen # 919 / # 920 (Zitronensäure).

Bei einem definierten Säuresystem ergibt die Verwendung eines Ultra-Turrax höhere Farbdichten als ein Dissolver, wenn man die Beschichtung # 917 mit # 918 und # 919 mit # 920 vergleicht. Dabei wird der Unterschied der verwendeten Säure von Ultra-Turrax zu Dissolver größer; das heißt: Je höher die Scherkräfte während der Dispergierung ist, desto kleiner scheint der Einfluß der Säure zu sein.

### Schlußfolgerung:

Essigsäure ist Zitronensäure vorzuziehen. Der Ultra-Turrax erzeugt beim Einsatz von Essigsäure und HP-Ausdruck gleiche beziehungsweise sonst überall höhere Farbdichten als der Dissolver. Bei Verwendung des Ultra-Turrax sollte man also auf der sicheren Seite liegen.

Die Korrelation mit den Farbintensitäten (Tabelle 4) ist auch recht gut. Es entstehen keine Widersprüche zwischen beiden Bewertungsarten, aber es ist erkennbar, daß die Meßwerte der Farbdichten größere Unterschiede zeigen als die manuelle Bewertung mit dem Auge.

### Diskussion der Printtests

Bei den Druckergebnissen auf beiden Druckern schneiden die Dispersionen mit Ultra-Turrax jeweils besser als die jeweiligen Dispersionen mit Dissolver bei Verwendung der gleichen Säure ab.

Unterschiede zwischen Zitronensäure/UT und Essigsäure/UT treten bei einzelnen Parametern der Druckauswertung auf (tendenziell bessere Farbintensität für Essigsäure, dafür tendenziell bessere Auflösung für Zitronensäure), in der Gesamtsumme der Drucktests sind sie ungefähr gleich.

Wenn man die verwendete Formulierung hinsichtlich der Saugfähigkeit optimieren und die Microrißbildung eliminieren würde, so würde wahrscheinlich die Streichfarbe mit der Dispersion, die mittels Essigsäure und Ultra-Turrax hergestellt worden ist, mit Abstand am besten abschneiden.

Die Auswertungen der Printtests sind in den Figuren 1, 2 und 3 aufgeführt.

**Beurteilungstabelle für Vierfarbdruck (Black and Colour)**

| Farhintenaität (Colour Statistics) | | | | Punktechärfe (Featharing) | | Übengänge (Colour Bleed) | | | | Kont. -schärfe (Acuity/Bleeding /Wicking/Feat.) | | | Schrifthild (Wicking/ Featharing) | | Halbton (Halftone) | | Visuelle Bilqualität (Illustration quality) |
|---|---|---|---|---|---|---|---|---|---|---|---|---|---|---|---|---|---|
| Cyan/Mag./Galb (CMY) | | Schearz (K) | | R in CMY | | CMY/CMY | | K/CMY | | | | | | | | | |
| 1+ | leuchtend , kräftig intensiv | | | | | | | | | | | | | | | | |
| 1 | matt, kräftig intensiv | 1 | voller Farbton, kräftig intensiv, samtig | 1 | klare Trennung, sehr gute his gute Schärfe | 1 | klare Trenrung, klar abgegrenzt | 1 | klare Trennung, klar abgegrenzt | 1 | Balken 1 klar, fein | 1 | Buchstaben in allen Schriften/Größen scharf-sehr scharf | 1 | Grauton optimal deutlich, Feinlinien abgegrenzt | 1 | Details erkennbar, Farbschattieningen, Farbe, Kontraste, Bildschärfe gut, Dots scharf |
| 2 | matt, blaß | 2 | intensiver schwarzer Farbton | 2 | leichter verlauf von schwarz, noch gute bis mittlere Schärfe | 2 | leichter Verlauf, noch gute Abgrenzung | 2 | leichter Verlauf, noch gute Abgrenzung | 2 | Balken 1 etwas unscharf, Balken 3 deutlich scharf | 2 | Buchstaben nur in Farbe bei allen Schriften/Größen scharf-sehr scharf | 2 | Grautöne etwas dunkler/verschwommen, Feinlinien abgegrenzt | 2 | Details nicht erkennbar, Farbschattierungen unscharf, Farbe, Kontraste, Bildschärfe gut, Dots scharf |
| 3+ | leuchtend , fleckig | | | | | | | | | | | | | | | | |
| 3 | kräftigkräftig intensiv, marnoriert | 3 | matt, blaß, etwas fleckig | 3 | schwarze Ränder unscharf | 3 | verlaufen, etwas verschwommen , Mischfarben | 3 | Verlauf von schwarzer Farbe, Ränder unscharf | 3 | Balken 3 klar, Balken 4 klar | 3 | B. nur bei großen Schriftenscharf | 3 | Grautonoptimal deutlich, Feinlinien verschwommen | 3 | Details nicht erkenbar, Farbschattierungen, Dots unscharf, Farbe fehlerhaft, Kontraste, Budscharfe gut |
| 3- | matt, fleckig | | | | | | | | | | | | | | | | |
| 4 | matt, marnonmoriert | 4 | ausgewaschener, blasser, Farbton, etwas fleckig | 4 | ausgeblutet, verlaufen, verschwommen | 4 | vermehrt Mischfarben, verschwommen | 4 | verlaufen, verschwommen, kein Rand erkennbar | 4 | Balken 4 scharf, Balken 3 unscharf | 4 | Ränder unscharf, nur bei Schwarz etwas ausgeblutet | 4 | Grauton verschwommen, Feinlinien verschwommen | 4 | Details nicht erkennbar, Farbschattierungen, Dots, Kontraste unscharf, Farbe fehlerhaft, Bildschärfe gut |
| 5 | blaß, mamoriert | 5 | stark marmoriert | 5 | starker Verlauf, kaum leserlich | 5 | starker Verlauf | 5 | Schwarz dringt flächig ein | 5 | Balken 4 unscharf, Balken 6 klar | 5 | Ränder unscharf, bei Farbe und Schwarzausgehlutet | 5 | Grauton dunkel bis schwarz, Feinlinien verschommen | 5 | Details nicht erkennbar, Farbschattienrungen, Dots, Kontraste unscharf, Farbe, Bildschärfe fehlerhaft |
| 6 | sehrmatt u./o. marnmoriert | 6 | sehr stark ausgewaschener Farb/Halbu./o. manmoriert | 6 | sehr starker Verlauf, unscharf, unleserlich | 6 | sehr starker Farbverlauf, neue Farbtone | 6 | Mischfarbe bildet sich | 6 | Balken 6 verschwonmen | 6 | Texte bei kleinen Schriften unleserlich | 6 | Grauton schwarz durchgefarbt, Feinlinien kaum erkennbar | 6 | Bild kann erkennbar |

## Patentansprüche

1. Dispersion von Aluminiumoxid in wässriger Lösung,
welche ein pyrogen hergestelltes Aluminiumoxid mit einer BET-Oberfläche von 100 ± 15 m²/g enthält, **dadurch gekennzeichnet, dass** sie einen pH-Wert von 4,5 ± 1,5 aufweist, wobei zur Einstellung des pH-Wertes zu der Dispersion Essigsäure hinzugegeben wurde und bei der Herstellung der Dispersion zur Dispergierung des hochoberflächigen pyrogen hergestellten Aluminiumoxides solange eine Scherung mit einem Rotor-Stator-Aggregat durchgeführt wurde bis eine Zielpartikelgröße von d₅₀ = 120 nm erreicht wurde.

2. Verfahren zur Herstellung der Dispersion von Aluminiumoxid gemäß Anspruch 1, **dadurch gekennzeichnet, dass** man das Aluminiumoxid in das vorgelegte Wasser, gegebenenfalls unter Rühren einbringt, den pH-Wert auf einen Wert von 4,5 ± 1,5 einstellt und die erhaltene Mischung unter Einbringung von Scherkräften mittels eines Rotor-Stator-Aggregates solange dispergiert bis eine Zielpartikelgröße von d₅₀ = 120 nm erreicht wird.

3. Verwendung der Dispersion gemäß Anspruch 1 zur Herstellung von Streichfarben beziehungsweise Ink-Jet-Medien.

4. Beschichtungen, **dadurch gekennzeichnet, daß** sie aus einem Substrat mit einer glänzenden Beschichtung bestehen, in der die Beschichtungen Aluminiumoxid Dispersionsadditive und ein Bindersystem enthalten,
wobei die die Beschichtung aufbauenden Aluminiumoxidpartikel aus der Dispersion gemäß Anspruch 1 stammen.

5. Beschichtungen gemäß Anspruch 4, **dadurch**
**gekennzeichnet, daß** die Beschichtung ein Aluminiumoxid-Bindergewichtsverhältnis von 10:1 bis 1:2 aufweist.

6. Beschichtungen gemäß Anspruch 4, **dadurch**
**gekennzeichnet, daß** diese aus Streichfarben angefertigt werden, die einen Feststoffgehalt von mindestens 15 Gew.-%, vorzugsweise von 22 % und mehr aufweisen.

7. Beschichtungen gemäß Anspruch 4, **dadurch**
**gekennzeichnet, daß** das Substrat ein Flächengewicht von 80 bis 250 g/m² aufweist.

8. Beschichtungen gemäß Anspruch 4, **dadurch gekennzeichnet, daß** das Substrat Papier ist.

9. Beschichtungen gemäß Anspruch 4, **dadurch gekennzeichnet, daß** das Substrat einen Cobb₁₀-Wert von 0 bis 60 hat.

10. Beschichtungen gemäß Anspruch 4, **dadurch gekennzeichnet, daß** auf dem Substrat eine wasserundurchlässige Sperrschicht aufgebracht worden ist.

11. Beschichtungen gemäß Anspruch 4, **dadurch gekennzeichnet, daß** das Substrat eine Polymerfolie ist.

## Claims

1. Dispersion of aluminium oxide in aqueous solution, comprising a pyrogenically prepared aluminium oxide having a BET surface area of 100 ± 15 m²/g, **characterized in that** it has a pH of 4.5 ± 1.5, acetic acid having been added to the dispersion in order to establish the pH, and the high-surface-area pyrogenically prepared aluminium oxide having been dispersed, during the preparation of the dispersion, by performing shearing with a rotor/stator assembly until a target particle size of d₅₀ = 120 nm was achieved.

2. Method for preparing the dispersion of aluminium oxide according to Claim 1, **characterized in that** the aluminium oxide is introduced into the initial charge of water, optionally with stirring, the pH is established at a level of 4.5 ± 1.5 and the resulting mixture is dispersed, with introduction of shearing forces by means of a rotor/stator assembly, until a target particle size of d₅₀ = 120 nm is achieved.

3. Use of the dispersion according to Claim 1 for producing papercoating slips or inkjet media.

4. Coatings **characterized in that** they consist of a substrate having a glossy coating, in which the coatings comprise aluminium oxide, dispersion additives and a binder system, the aluminium oxide particles making up the coating originating from the dispersion according to Claim 1.

5. Coatings according to Claim 4, **characterized in that** the coating has an aluminium oxide-to-binder weight ratio of 10:1 to 1:2.

6. Coatings according to Claim 4, **characterized in that** they are prepared from papercoating slips which have a solids content of at least 15% by weight, preferably of 22% or more.

7. Coatings according to Claim 4, **characterized in that** the substrate has a basis weight of 80 to 250 g/m².

8. Coatings according to Claim 4, **characterized in that** the substrate is paper.

9. Coatings according to Claim 4, **characterized in that** the substrate has a Cobb₁₀ value of 0 to 60.

10. Coatings according to Claim 4, **characterized in that** a water-impermeable barrier layer has been applied to the substrate.

11. Coatings according to Claim 4, **characterized in that** the substrate is a polymeric film.

## Revendications

1. Dispersion d'oxyde d'aluminium en solution aqueuse, qui contient un oxyde d'aluminium préparé par voie pyrogène, présentant une surface BET de 100 ± 15 m²/g, **caractérisée en ce qu'**elle présente un pH de 4,5 ± 1,5, de l'acide acétique ayant été ajouté à la dispersion pour le réglage du pH et un cisaillement ayant été réalisé à l'aide d'un appareil à rotor-stator lors de la préparation de la dispersion, en vue de disperser l'oxyde d'aluminium préparé par voie pyrogène, à grande surface, jusqu'à ce qu'une grosseur de particule cible d₅₀ = 120 nm soit atteinte.

2. Procédé pour la préparation de la dispersion d'oxyde d'aluminium selon la revendication 1, **caractérisé en ce qu'**on introduit l'oxyde d'aluminium dans de l'eau disposée au préalable, le cas échéant sous agitation, on règle le pH à une valeur de 4,5 ± 1,5 et on disperse le mélange obtenu par l'introduction de forces de cisaillement au moyen d'un appareil à rotor-stator jusqu'à ce qu'une grosseur de particule cible d₅₀ = 120 nm soit atteinte.

3. Utilisation de la dispersion selon la revendication 1 pour la préparation de peintures ou d'agents pour imprimantes à jet d'encre.

4. Revêtements, **caractérisés en ce qu'**ils sont constitués d'un substrat présentant un revêtement brillant, dans lequel les revêtements contiennent des additifs de dispersion, de l'oxyde d'aluminium et un système de liant, les particules d'oxyde d'aluminium formant le revêtement provenant de la dispersion selon la revendication 1.

5. Revêtements selon la revendication 4, **caractérisés en ce que** le revêtement présente un rapport pondéral d'oxyde d'aluminium à liant de 10:1 à 1:2.

6. Revêtements selon la revendication 4, **caractérisés en ce qu'**ils sont préparés à partir de peintures qui présentent une teneur en solide d'au moins 15% en poids, de préférence de 22% et plus.

7. Revêtements selon la revendication 4, **caractérisés en ce que** le substrat présente un poids surfacique de 80 à 250 g/m².

8. Revêtements selon la revendication 4, **caractérisés en ce que** le substrat est en papier.

9. Revêtements selon la revendication 4, **caractérisés en ce que** le substrat présente une valeur de Cobb₁₀ de 0 à 60.

10. Revêtements selon la revendication 4, **caractérisés en ce qu'**une couche de blocage imperméable à l'eau a été appliquée sur le substrat.

11. Revêtements selon la revendication 4, **caractérisés en ce que** le substrat est une feuille en polymère.
